# EUROPÄISCHE PATENTANMELDUNG

(11) **EP 4 624 110 A1**
(43) Veröffentlichungstag der Anmeldung: **01.10.2025**
(21) Anmeldenummer: 25164764.0
(22) Anmeldetag: 19.03.2025
(51) Int. Cl.: B25J 9/16

(54) **VEFAHREN ZUR ÜBERWACHUNG EINES GREIFZUSTANDS EINES VON EINEM SAUGGREIFER ANGESAUGTEN GREIFOBJEKTES**

(30) Priorität: 27.03.2024 DE 102024108735
(71) Anmelder: J. Schmalz GmbH, 72293 Glatten (DE)
(72) Erfinder: Schaaf, Walter, 72250 Freudenstadt-Grüntal (DE); Frey, Matthias, 72172 Sulz-Dürrenmettstetten (DE); Krieg, Steffen, 71111 Waldenbuch (DE); Kinting, Axel, 72250 Freudenstadt (DE)
(74) Vertreter: DREISS Patentanwälte PartG mbB

(57) **Zusammenfassung**

Die Erfindung betrifft ein Verfahren zur Überwachung eines Greifzustands eines von einem Sauggreifer (12) gegriffenen Greifobjektes (14), wobei der Sauggreifer einen Saugkörper (32) mit einem zumindest abschnittsweise von einer flexibel verformbaren Saugkörperwandung (36) begrenzten Saugraum (34) aufweist, wobei ein in einer Greifkonfiguration in dem Saugraum vorherrschender Unterdruck pU₀ gemessen und als Referenz-Unterdruck pU_{ref} in einer nicht-flüchtigen Speichereinrichtung hinterlegt wird, wobei ein Arbeitsprozess durchgeführt wird, der mit einer Kraft- und/oder Momenteneinwirkung auf das Greifobjekt einhergeht, wobei zumindest zu definierten Überwachungszeitpunkten während des Arbeitsprozesses der in dem Saugraum vorherrschende Unterdruck pUᵢₛₜ gemessen wird und mit dem Referenzdruck pU_{ref} verglichen wird und/oder die Abweichung von dem Referenz-Unterdruck pU_{ref} ermittelt wird. Die Erfindung betrifft auch eine Handhabungsanlage zur Durchführung des Verfahrens sowie eine Verwendung eines Drucksensors zur Detektion von auf ein Greifobjekt wirkenden Kräften.

## Beschreibung

Die Erfindung betrifft ein Verfahren zur Überwachung eines Greifzustands eines von einem Sauggreifer angesaugten Greifobjektes.

Sauggreifer sind in vielfältiger Art und Weise aus dem Stand der Technik bekannt. Insbesondere haben sich Sauggreifer etabliert, welche einen Saugkörper mit einem zumindest abschnittsweise von einer flexibel verformbaren Saugkörperwandung begrenzten Saugraum aufweisen. Der Saugraum weist üblicherweise eine Saugöffnung auf, welche von einer Dichtlippe des der Saugkörperwandung umgeben ist. Zum Greifen eines Greifobjektes wird dann ein Ansaugprozess durchgeführt, in welchem der Sauggreifer mit der Dichtlippe auf das Greifobjekt aufgesetzt oder angedrückt und sodann der Saugraum mit Unterdruck beaufschlagt wird.

Solche Sauggreifer werden oftmals in automatisierten Produktionsumgebungen verwendet, bspw. um Werkstücke während einer Bearbeitung zu halten und/oder die Werkstücke zwischen zwei Bearbeitungsstationen zu verbringen. Dies macht es wünschenswert, einen Handhabungsvorgang sensorisch überwachen zu können.

Beispielsweise ist es aus der EP3243608B1 bekannt, den oben skizzierten Ansaugprozess durch Messen einer Druck-Kennlinie zu überwachen.

Es besteht aber darüber hinaus der Bedarf, einen Funktionszustand, insbesondere einen Greifzustand, auch nach Beendigung des Ansaugprozesses, bspw. während eines Bearbeitungsprozesses oder Verlagerungsprozesses zu überwachen. Insbesondere ist es wünschenswert, Kräfte und Momente, die auf ein von dem Sauggreifer bereits angesaugtes Greifobjekt wirken (bspw. Bearbeitungskräfte einer Bearbeitungsmaschine) zu detektieren.

Zu diesem Zweck ist es beispielsweise bekannt, einen Verbindungsflansch, welcher den Sauggreifer mit einem Manipulator, bspw. Roboter, verbindet mit Kraft und/oder Momentensensoren auszustatten. Solche Kraftsensoren können auch zur Kollisionsdetektion eingesetzt werden.

Darüber hinaus ist es aus der WO 2018 195 570 A1 bekannt, an einem Handhabungsgerät eine gasgefüllte Kammer vorzusehen, die von einer flexiblen Hülle umgeben ist, welche bspw. durch Kollision mit einem Hindernis verformt wird. Durch Messung des Gasdrucks im Inneren der Kammer kann dann eine Kollision erkannt werden.

Der vorliegenden Erfindung liegt die Aufgabe zugrunde, auf konstruktiv einfache Weise eine zuverlässige Überwachung eines Greifzustands eines von einem Sauggreifer gegriffenen Gegenstands zu ermöglichen.

Diese Aufgabe wird durch ein Verfahren mit den Merkmalen des Anspruchs 1 gelöst. Hierbei handelt es sich um ein Verfahren zur Überwachung eines Greifzustands eines von einem Sauggreifer gegriffenen Greifobjektes.

Zur Ausführung des Verfahrens weist der Sauggreifer einen oder mehrere Saugkörper auf. Der Saugkörper weist einen Saugraum auf, der zumindest abschnittsweise von einer flexiblen Saugkörperwandung begrenzt ist. Insbesondere ist die Saugkörperwandung flexibel und elastisch verformbar ausgebildet, sodass durch Verformung der Saugkörperwandung eine Konfiguration des Saugraums, insbesondere dessen Volumen veränderbar ist. Der Saugraum ist insbesondere durch eine Saugöffnung offen. Insbesondere weist die Saugkörperwandung an einem freien Ende einen Anlageabschnitt (auch als Dichtlippe bezeichnet) zur Anlage an das zu greifende Greifobjekt auf, wobei der Anlageabschnitt die Saugöffnung umschließt. Die Saugkörperwandung umgreift den Saugraum vorzugsweise vollständig. Die Saugkörperwandung kann durchgehend, d.h. unterbrechungsfrei, ausgebildet sein. Die Saugkörperwandung kann auch mehrere voneinander beabstandete Teilabschnitte aufweisen.

Der Sauggreifer, insbesondere der Saugkörper, umfasst insbesondere außerdem eine Anlagefläche (auch als Aufstandsfläche bezeichnet) zur Anlage eines Greifobjektes in einer Greifkonfiguration, in welcher das Greifobjekt von dem Sauggreifer angesaugt ist. Die Anlagefläche ist vorzugsweise in dem Saugraum angeordnet.

Zum Greifen des Greifobjekts mit dem Sauggreifer ist ein Ansaugprozess, umfassend das Beaufschlagen des Saugraums mit Unterdruck, erforderlich. Insbesondere wird zum Greifen des Greifobjektes ein Ansaugprozess durchgeführt. Der Unterdruck kann von einer Unterdruckerzeugungseinrichtung bereitgestellt sein. Der Ansaugprozess geht mit einem Übergang des Sauggreifers von einer Anfangskonfiguration zu einer Greifkonfiguration (Endkonfiguration) einher. In der Greifkonfiguration ist der Saugkörper, insbesondere der Saugraum, gegenüber der Anfangskonfiguration komprimiert. Insofern ist ein Saugvolumen des Saugraums in der Greifkonfiguration kleiner als ein Saugvolumen des Saugraums in der Anfangskonfiguration.

In der Greifkonfiguration, d.h. nach Abschluss des Ansaugprozesses, herrscht in dem Saugraum ein annähernd konstanter (Gleichgewichts-)Unterdruck pU₀. Insbesondere liegt das Greifobjekt an der vorstehend beschriebenen Anlagefläche des Sauggreifers an.

Gemäß dem Verfahren wird dieser Unterdruck pU₀ (welcher sich nach Erreichen der Greifkonfiguration / Endkonfiguration in dem Saugraum einstellt) gemessen, insbesondere mittels einer Sensoreinrichtung zur Messung eines in dem Saugraum vorherrschenden Unterdruckes. Der gemessene Unterdruck pU₀ oder ein hiervon abgeleiteter Druckwert pU₀ₖₒᵣᵣ wird sodann als Referenz-Unterdruck pU_{ref} in einer nicht-flüchtigen Speichereinrichtung hinterlegt. Insofern wird nach dem Erreichen der Greifkonfiguration ein in dem Saugraum vorherrschender Unterdruck pU₀ mittels einer Sensoreinrichtung gemessen und dieser Unterdruck pU₀ oder ein hiervon abgeleiteter Druckwert pU₀ₖₒᵣᵣ als Referenz-Unterdruck pU_{ref} in einer nicht-flüchtigen Speichereinrichtung hinterlegt. Die Speichereinrichtung kann insbesondere Teil einer Steuereinrichtung zur Ansteuerung der Sensoreinrichtung und/oder des Sauggreifers sein, bspw. eine Steuereinrichtung einer Handhabungsanlage, in welche der Sauggreifer integriert ist.

Nach dem Erreichen der Greifkonfiguration und insbesondere nach dem Ermitteln des Referenz-Unterdrucks pU_{ref} wird ein Arbeitsprozess, insbesondere Bearbeitungsprozess, durchgeführt, der mit einer Kraft- und/oder Momenteneinwirkung auf das Greifobjekt und in Folge dessen mit einer Verformung der Saugkörperwandung des Saugkörpers einhergeht. Insbesondere wird ein Volumen des Saugraums verändert, was wiederum zu einer Druckänderung in dem Saugraum führt. Beispielsweise ist es denkbar, dass das von dem Sauggreifer angesaugte Greifobjekt einem Bearbeitungsprozess unterzogen wird (z.B. Blechbearbeitung), in welchem Bearbeitungskräfte und/oder - momente auf das Greifobjekt wirken. Ein solcher Arbeitsprozess kann auch ein Verlagern des Sauggreifers mit dem daran angesaugten Greifobjekt umfassen oder daraus bestehen. Die auf das Greifobjekt wirkenden Kräfte und/oder Momente können dann beispielsweise Beschleunigungskräfte oder Kräfte in Folge einer (grundsätzlich unerwünschten) Kollision des Greifobjektes mit einem Kollisionsobjekt sein.

Gemäß dem Verfahren wird zumindest zu definierten Überwachungszeitpunkten während des Arbeitsprozesses (also nach Erreichen der Endkonfiguration / Greifkonfiguration) der in dem Saugraum aktuell vorherrschende Unterdruck pUᵢₛₜ gemessen, insbesondere mittels der vorstehend beschriebenen Sensoreinrichtung zur Messung des in dem Saugraum vorherrschenden Unterdruckes. Es ist auch denkbar, dass eine den Zeitverlauf des Unterdruckes während des Arbeitsprozesses repräsentierende Kennlinie ermittelt wird.

Der gemessene Unterdruck pUᵢₛₜ wird mit dem Referenz-Unterdruck pU_{ref} verglichen. Alternativ oder zusätzlich wird eine Abweichung des Unterdrucks pUᵢₛₜ von dem Referenzdruck pU_{ref} ermittelt.

Das vorgeschlagene Verfahren ermöglicht es, durch einfache Unterdruckmessungen, insbesondere mit nur einer Sensoreinrichtung (z.B. nur einem Drucksensor), Funktionsdaten zu ermitteln, welche einen Greifzustand, insbesondere eine Kraft- oder Momenteneinwirkung auf das Greifobjekt, während eines Arbeitsprozesses repräsentieren und somit eine Überwachung und Auswertung des Arbeitsprozesses ermöglichen. Das Verfahren macht sich zu Nutze, dass durch die Ausgestaltung des Sauggreifers mit flexibel verformbarer Saugkörperwandung Kräfte, welche auf das Greifobjekt einwirken, zu einer Verformung der Saugkörperwandung führen und somit zu einer Druckänderung in dem Saugraum. Aus einer detektierten Druckänderung kann insofern auf eine Krafteinwirkung auf das Greifobjekt geschlossen werden. Es sind insofern keine komplexen zusätzlichen Sensoreinrichtungen erforderlich, was einen einfachen und kostengünstigen Aufbau ermöglicht. Insbesondere kann sogar der üblicherweise ohnehin in einem Sauggreifer oder in einem Ansaugströmungsweg vorhandene Drucksensor zur Detektion von Bearbeitungskräften verwendet werden.

Der Sauggreifer kann grundsätzlich verschieden ausgebildet sein. Die Saugkörperwandung kann den Saugraum nur teilweise begrenzen. Die Saugkörperwandung kann auch den Saugraum vollständig umgreifen. Beispielsweise kann der Saugkörper ein Elastomersaugkörper sein. Der Elastomersaugkörper kann insbesondere einen Basisabschnitt (auch als Saugerhals bezeichnet) und eine, insbesondere mit dem Basisabschnitt einstückig ausgebildete, flexibel verformbare Saugkörperwandung aufweisen, welche einen Saugraum (auch als Sauginnenraum oder Saugvolumen bezeichnet) begrenzt. Der Saugraum ist insbesondere durch den Basisabschnitt mit Unterdruck beaufschlagbar. Insbesondere weist die Saugkörperwandung an einem dem Basisabschnitt abgewandten freien Ende einen Anlageabschnitt (auch als Dichtlippe bezeichnet) zur Anlage an das zu greifende Greifobjekt auf, wobei der Anlageabschnitt eine Saugöffnung des Saugraums umschließt. Die Saugkörperwandung ist flexibel, insbesondere elastisch reversibel, verformbar ausgebildet, sodass durch Verformung der Saugkörperwandung eine Konfiguration des Saugraums, insbesondere dessen Volumen, veränderbar ist.

Die Anlagefläche des Sauggreifers kann einen festen Anschlag für das Greifobjekt bilden. Insofern kann die Anlagefläche derart ausgebildet sein, dass dann, wenn das Greifobjekt an der Anlagefläche anliegt, eine Bewegung des Greifobjektes in einer Richtung auf die Anlagefläche zu blockiert ist.

Bei anderen Ausgestaltungen ist es aber auch denkbar, dass die Anlagefläche nachgiebig ausgebildet ist. Beispielsweise kann die Anlagefläche durch einen Anlageabschnitt aus einem elastisch nachgiebigen Materials (bspw. Elastomer oder Schaum) gebildet sein oder an diesem Anlageabschnitt vorgesehen sein. Auch ist es denkbar, dass die Anlagefläche federnd gelagert ist. Beispielsweise kann die Anlagefläche durch einen Anlageabschnitt bereitgestellt ist, welcher über eine Federeinrichtung, insbesondere Druckfeder, an dem Sauggreifer, insbesondere in dem Saugraum des Saugkörpers, angreift. Bei Einwirkung einer Kraft in einer Richtung auf die Anlagefläche zu kann insofern die Feder komprimiert und das Greifobjekt entgegen der Federvorspannung in dieser Richtung bewegt werden.

Der Ansaugprozess kann unterschiedlich ausgebildet sein. Beispielsweise ist es denkbar, dass der Sauggreifer mit der Saugkörperwandung, insbesondere einem die Saugöffnung begrenzenden Anlageabschnitt (Dichtlippe) der Saugkörperwandung, auf das Greifobjekt aufgesetzt wird. Durch Beaufschlagung des Saugraums mit Unterdruck kann dann das Greifobjekt angesaugt und hierbei in einer Ansaugrichtung gegen die Anlagefläche bewegt werden. Alternativ ist es auch denkbar, dass der Sauggreifer unter Verformung der Saugkörperwandung auf das Greifobjekt gedrückt wird, bis das Greifobjekt an der Anlagefläche anliegt.

Die Sensoreinrichtung kann einen oder mehrere Drucksensoren aufweisen. Die Sensoreinrichtung kann dazu ausgebildet sein, den in dem Saugraum vorherrschenden Unterdruck unmittelbar in dem Saugraum zu messen. Denkbar ist auch die Messung des Druckes in einem Zugang zu dem Saugraum, über welchen eine Verbindung mit der Unterdruckerzeugungseinrichtung erfolgt.

Im vorliegenden Zusammenhang meint "Kraft- und/oder Momenteneinwirkung" eine extern auf das Greifobjekt oder den Sauggreifer einwirkende Kraft oder Moment. Insbesondere werden alleine durch die Gewichtskraft des Greifobjektes wirkende Kräfte nicht als "Kraft- und/oder Momenteneinwirkung" verstanden.

Nach einer besonders vorteilhaften Ausgestaltung des Verfahrens wird bei einer Abweichung des aktuellen Unterdrucks pUᵢₛₜ von dem Referenzdruck pU_{ref}, insbesondere zumindest bei Überschreiten eines vorgegebenen oder vorgebbaren Schwellwertes, ein Kraftsignal erzeugt, welches eine Kraft- und/oder Momenteneinwirkung auf das gegriffene Greifobjekt oder den Sauggreifer, insbesondere eine auf das gegriffene Greifobjekt oder den Sauggreifer wirkende Kraft und/oder wirkendes Moment, repräsentiert.

Das Kraftsignal kann lediglich zu Informationszwecken dienen, bspw. dass eine (externe) Kraft auf das Greifobjekt wirkt. Es ist auch denkbar, dass in Abhängigkeit des Kraftsignals der Arbeitsprozess verändert wird, bspw. auf der Speichereinrichtung hinterlegte Prozessparameter oder Prozessdaten, welche den Arbeitsprozess definieren, verändert werden (siehe unten).

Aus einem im Vergleich zu dem Referenz-Unterdruck pU_{ref} erhöhten Unterdruck pUᵢₛₜ in dem Saugraum kann insbesondere abgelesen werden, dass eine Kraft in einer Richtung von der Anlagefläche weg auf das Greifobjekt wirkt. Insbesondere kann dann, wenn ein im Vergleich zu dem Referenz-Unterdruck pU_{ref} erhöhter Unterdruck pUᵢₛₜ in dem Saugraum gemessen wird, ein Kraftsignal erzeugt, welches eine Krafteinwirkung auf den Sauggreifer in einer Richtung von der Anlagefläche weg repräsentiert.

Aus einem im Vergleich zu dem Referenz-Unterdruck pU_{ref} reduzierten Unterdruck pUᵢₛₜ in dem Saugraum kann insbesondere abgelesen werden, dass eine Kraft in einer Richtung auf die Anlagefläche zu auf das Greifobjekt wirkt. In diesem Fall kann ein Kraftsignal erzeugt werden, welches eine Krafteinwirkung auf den Sauggreifer in einer Richtung auf die Anlagefläche zu repräsentiert.

Im Rahmen einer vorteilhaften Weiterbildung kann aus einer ermitteln Abweichung des Unterdrucks pUᵢₛₜ von dem Referenz-Unterdruck pU_{ref} zu einem Überwachungszeitpunkt eine zu diesem Überwachungszeitpunkt als Belastung auf das Greifobjekt oder den Sauggreifer wirkende Kraft und/oder Moment ermittelt werden. Beispielsweise ist es denkbar, dass in der nicht-flüchtigen Speichereinrichtung eine Datenbank hinterlegt ist, welche einer ermittelten Druckänderung in dem Saugraum (Abweichungen des Unterdrucks pUᵢₛₜ von dem Referenz-Unterdruck pU_{ref}) eine Kraft zuordnet. Die Datenbank kann beispielsweise zuvor im Rahmen von Referenzmessungen ermittelt worden sein.

Alternativ oder zusätzlich zu der Ermittlung einer Kraft und/oder eines Momentes ist es denkbar, dass in Abhängigkeit der Abweichung des Unterdrucks pUᵢₛₜ von dem Referenz-Unterdruck pU_{ref} der Arbeitsprozess angepasst wird. Beispielsweise ist es möglich, dass in Abhängigkeit einer ermittelten Abweichung des Unterdrucks pUᵢₛₜ von dem Referenz-Unterdruck pU_{ref} zu einem bestimmten Überwachungszeitpunkt, Prozessparameter oder Prozessdaten, welche Arbeitsschritte des Arbeitsprozesses definieren, verändert werden. Die Prozessdaten können beispielsweise Steueranweisungen an einen Manipulator zum Verlagern des Sauggreifers und/oder Steueranweisungen an eine Bearbeitungseinrichtung zum Bearbeiten des Greifobjektes repräsentieren.

Weiterhin ist es denkbar, dass in der nicht-flüchtigen Speichereinrichtung Soll-Kraftwerte (und/oder Soll-Momentenwerte) hinterlegt sind, welche die während des Arbeitsprozesses auf das Greifobjekt oder den Sauggreifer wirkenden Soll-Kräfte (und/oder Soll-Momente) repräsentieren, d.h. diejenigen Kräfte (und/oder Momente), die in Folge des Arbeitsprozesses zu bestimmten Überwachungszeitpunkten erwartet werden (bspw. aufgrund eines zu diesem Zeitpunkt durchgeführten Bearbeitungsschrittes).

Im Rahmen einer vorteilhaften Weiterbildung kann aus einer ermitteln Abweichung des Unterdrucks pUᵢₛₜ von dem Referenz-Unterdruck pU_{ref} zu einem Überwachungszeitpunkt eine zu diesem Überwachungszeitpunkt als Belastung auf das Greifobjekt oder den Sauggreifer wirkende Kraft (und/oder Moment) ermittelt werden, und diese Kraft (und/oder Moment) mit einem auf der Speichereinrichtung (für diesen Überwachungszeitpunkt) hinterlegten Soll-Kraftwert (und/oder Soll-Momentenwert) verglichen werden, wobei der Soll-Kraftwert (und/oder Soll-Momentenwert) eine auf das Greifobjekt (14) wirkenden Kraft repräsentiert, welche in Folge des Arbeitsprozesses zu dem Überwachungszeitraum erwartet wird. Insofern können die durch die Unterdruckmessungen ermittelnden Belastungen mit den erwarteten Beanspruchungen aus dem Arbeitsprozess verglichen werden und somit der Arbeitsprozess überwacht werden.

Außerdem ist es denkbar, dass eine Kraftabweichung (und/oder Momentenabweichung) der ermittelten Kraft (und/oder Moment) von dem Soll-Kraftwert (und/oder Soll-Momentenwert) ermittelt wird. Insbesondere können in Abhängigkeit einer solchen Kraftabweichung (und/oder Momentenabweichung) in der Speichereinrichtung hinterlegte Prozessdaten des Arbeitsprozesses, welche Arbeitsschritte des Arbeitsprozesses definieren, verändert werden. Insofern kann der Arbeitsprozess in Abhängigkeit des gemessenen Unterdrucks in dem Saugraum gesteuert werden. Beispielsweise ist es denkbar, dass in Abhängigkeit einer ermittelten Kraftabweichung eine Position des Sauggreifers oder eines Bearbeitungswerkzeugs verändert wird.

Die vorstehend genannte Aufgabe wird auch durch eine Handhabungsanlage mit den Merkmalen des Anspruchs 9 gelöst. Die Handhabungsanlage umfasst einen Sauggreifer zum Ansaugen und somit Greifen eines Greifobjektes. Der Sauggreifer weist einen Saugkörper mit einem zumindest abschnittsweise von einer flexibel verformbaren Saugkörperwandung begrenzten Saugraum auf. Der Sauggreifer, insbesondere der Saugkörper, weist außerdem eine, vorzugsweise in dem Saugraum angeordnete, Anlagefläche zur Anlage des Greifobjektes in einer Greifkonfiguration des Sauggreifers auf. Die Handhabungsanlage umfasst außerdem einen Manipulator zur Verlagerung des Sauggreifers. Der Manipulator kann beispielsweise als Roboter, insbesondere Mehr-Achs-Roboter, ausgebildet sein. Die Handhabungsanlage umfasst insbesondere außerdem eine Unterdruckerzeugungseinrichtung zur Versorgung des Sauggreifers mit Unterdruck. Die Unterdruckerzeugungseinrichtung kann beispielsweise als Gebläse, Pumpe oder Ejektor ausgebildet sein. Die Handhabungsanlage umfasst außerdem eine Sensoreinrichtung zum Detektieren eines in dem Saugraum vorherrschenden Drucks. Die Sensoreinrichtung kann insbesondere einen oder mehrere Drucksensoren umfassen. Die Handhabungsanlage umfasst außerdem eine Steuereinrichtung zum Ansteuern der Handhabungsanlage. Die Steuereinrichtung ist dazu eingerichtet, eines der vorstehend beschriebenen Verfahren auszuführen. Die Steuereinrichtung umfasst insbesondere eine nicht-flüchtige Speichereinrichtung, auf welcher Steueranweisungen hinterlegt sind, die bei Ausführung die Steuereinrichtung dazu veranlassen, eines der vorstehend beschriebenen Verfahren auszuführen.

Die vorstehend in Bezug auf das Verfahren beschriebenen Vorteile und optionalen Merkmale des Sauggreifers und der Sensoreinrichtung können auch zur Ausgestaltung der Handhabungsanlage dienen, sodass zur Vermeidung von Wiederholung auf vorstehende Offenbarung hierzu verwiesen wird.

Die vorstehend genannte Aufgabe wird auch gelöst durch die Verwendung einer Sensoreinrichtung, welche zum Messen eines Unterdrucks in einem Saugraum eines Sauggreifers ausgebildet, insbesondere vorgesehen, ist, zur Detektion von Kräften und/oder Momenten, welche auf ein von dem Sauggreifer gegriffenes Greifobjekt wirken. Insbesondere kann eine (üblicherweise ohnehin) in einer mit dem Sauggreifer strömungsverbundenen Unterdruckerzeugungseinrichtung vorgesehene Sensoreinrichtung zur Detektion von Kräften und/oder Momenten, welche auf ein von dem Sauggreifer gegriffenes Greifobjekt wirken, verwendet werden. Wie vorstehend erwähnt, kann somit auf aufwändige (zusätzliche) Sensorik verzichtet werden, was eine Komplexität reduziert und einen vergleichsweise kostengünstigen Aufbau ermöglicht.

Die Erfindung wird im Folgenden anhand der Figuren näher erläutert. Es zeigen:
- Fig. 1: vereinfachte schematische Darstellung einer beispielhaften Ausgestaltung einer Handhabungsanlage;
- Fig. 2-5: vereinfachte schematische Darstellungen einer beispielhaften Ausgestaltung eines Saugkörpers in verschiedenen Konfigurationen;
- Fig. 6: vereinfachte schematische Darstellung einer ersten beispielhaften Ausgestaltung eines Sauggreifers mit nachgiebiger Anlagefläche;
- Fig. 7: vereinfachte schematische Darstellung einer zweiten beispielhaften Ausgestaltung eines Sauggreifers mit nachgiebiger Anlagefläche; und
- Fig. 8: Flussdiagramm zur Erläuterung eines beispielhaften Verfahrens zum Betreiben der Handhabungsanlage.

In der nachfolgenden Beschreibung sowie in den Figuren sind für identische oder einander entsprechende Merkmale jeweils dieselben Bezugszeichen verwendet.

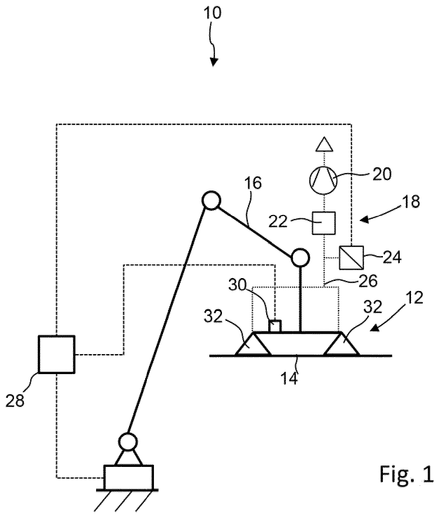

Die Figur 1 zeigt in vereinfachter schematischer Darstellung eine beispielhafte Ausgestaltung einer Handhabungsanlage, welche insgesamt mit dem Bezugszeichen 10 bezeichnet ist.

Die Handhabungsanlage 10 umfasst einen Sauggreifer 12 zum Greifen eines Greifobjektes 14 und einen Manipulator 16 zum Verlagern des Sauggreifers 12. Der Sauggreifer 12 ist mit dem Manipulator 16 verbunden, beispielsweise über eine Kopplungseinrichtung (nicht gesondert dargestellt).

Der Manipulator 16 (in Figur 1 lediglich schematisch dargestellt) ist beispielhaft als Roboter ausgebildet. Es ist aber auch möglich, dass der Manipulator 16 lediglich eine angetriebene Achse, bspw. Linearachse, aufweist.

Die Handhabungsanlage 10 umfasst im Beispiel außerdem eine Unterdruckversorgungseinrichtung 18 zur Versorgung des Sauggreifers 12 mit Unterdruck. Die Unterdruckversorgungseinrichtung 18 weist eine Unterdruckerzeugungseinrichtung 20 und eine Ventileinrichtung 22 zur Steuerung einer Strömungsverbindung zwischen der Unterdruckerzeugungseinrichtung 20 und dem Sauggreifer 12 auf.

Die Handhabungsanlage 10 umfasst außerdem eine Sensoreinrichtung 16 zum Messen eines Unterdrucks in dem Sauggreifer 12 auf. Im Beispiel ist die Sensoreinrichtung 24 dazu ausgebildet, den Unterdruck im Sauggreifer 12 indirekt über eine Unterdruckmessung in einer Fluidleitung 26 zwischen Sauggreifer 12 und Unterdruckerzeugungseinrichtung 20 zu messen. Bei nicht dargestellten Ausgestaltungen kann die Sensoreinrichtung 24 aber auch den Unterdruck direkt in dem Sauggreifer 12 messen. Die Sensoreinrichtung 24 kann einen oder mehrere Drucksensoren aufweisen.

Die Handhabungsanlage 10 umfasst außerdem eine Steuereinrichtung 28 zur Ansteuerung der Handhabungsanlage 10. Die Steuereinrichtung 28 ist insbesondere zum Ansteuern des Manipulators 16, der Unterdruckversorgungseinrichtung 18 und der Sensoreinrichtung 24 ausgebildet. Im dargestellten Beispiel weist der Sauggreifer 12 beispielhaft eine mit der Steuereinrichtung 28 zusammenwirkende optionale Sub-Steuerung 30 des Sauggreifers 12 auf.

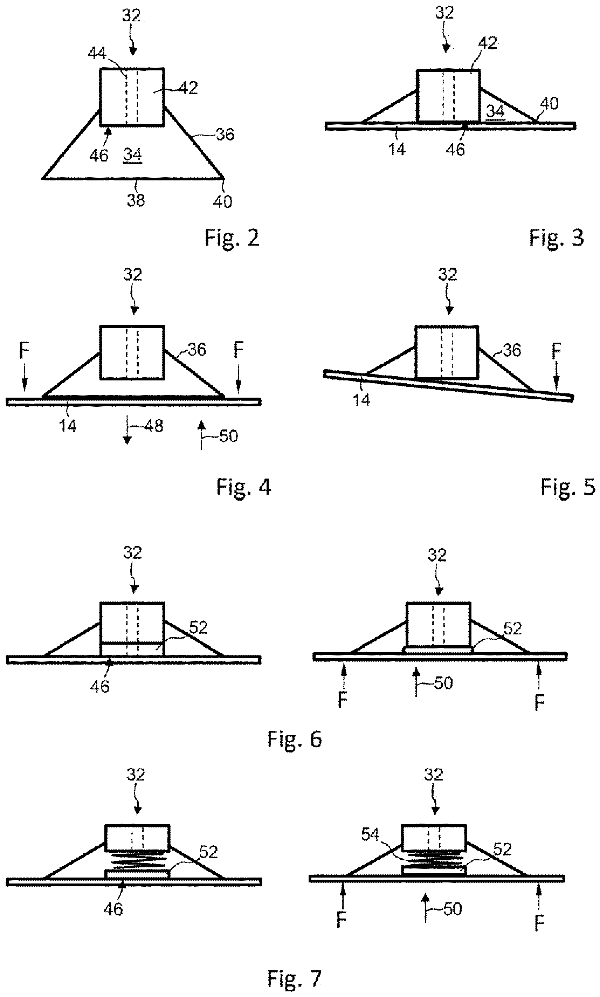

Der Sauggreifer 12 weist wenigstens einen, im Beispiel zwei, Saugkörper 32 zum Ansaugen eines Greifobjektes 18, bspw. Blech, auf. Eine beispielhafte Ausgestaltung eines solchen Saugkörpers 32 wird nachfolgend unter Bezugnahme auf die Figuren 2 bis 5 beschrieben.

Die Figur 2 zeigt in vergrößerter Ansicht einen solchen Saugkörper 32 in vereinfachter schematischer Schnittdarstellung. Der Saugkörper 32 weist einen Saugraum 34 (auch als Sauginnenraum oder Ansaugvolumen bezeichnet) auf, welcher von einer Saugkörperwandung 36 begrenzt ist und durch eine Saugöffnung 38 offen ist. Die Saugöffnung 38 ist von einem Anlageabschnitt 40 der Saugkörperwandung 36 begrenzt, welcher eine Dichtlippe zur Anlage an ein Greifobjekt dient.

Im konkreten Beispiel weist der Saugkörper 32 außerdem einen Basisabschnitt 42 auf, von welchem sich die Saugkörperwandung 36 trichterförmig weg erstreckt. Bei nicht dargestellten Ausgestaltungen kann die Saugkörperwandung 36 bspw. auch in Form eines Faltenbalgs ausgebildet sein. Der Basisabschnitt 42 weist einen innenliegenden Kanal 44 auf, über welchen der Saugraum 34 mit Unterdruck versorgbar ist. Der Kanal 44 kann insbesondere über die Fluidleitung 26 mit der Unterdruckerzeugungseinrichtung 20 fluidisch verbunden sein. Der Basisabschnitt 42 bildet insofern einen Anschlussabschnitt des Saugkörpers 32.

Der Saugkörper 32 weist außerdem eine Anlagefläche 46 zur Anlage eines angesaugten Greifobjektes 14 auf. Im Beispiel ist die Anlagefläche 46 in dem Saugraum 34 angeordnet. Beispielsweise kann die Anlagefläche 46 an einer Stirnseite des Basisabschnitts 42 oder durch die Stirnseite des Basisabschnitts 42 bereitgestellt sein.

Die Saugkörperwandung 36 ist flexibel verformbar ausgebildet, sodass beim Aufsetzen des Saugkörpers 32 auf ein Greifobjekt und insbesondere während eines Ansaugprozesses die Saugkörperwandung 36 unter Veränderung eines Volumens des Saugraums 34 verformbar ist.

Die Figur 2 zeigt den Saugkörper 30 in einer Anfangskonfiguration, in welcher kein Greifobjekt 14 angesaugt ist. Die Figur 3 zeigt den Saugkörper in einer Greifkonfiguration (Endkonfiguration), in welcher ein Greifobjekt 14 angesaugt ist und an der Anlagefläche 46 anliegt. Wie aus Figur 3 ersichtlich, ist in der Greifkonfiguration ein Volumen des Saugraums 34 gegenüber der Anfangskonfiguration reduziert.

Wie vorstehend erwähnt, kann durch Kraft- und/oder Momenteneinwirkung auf das Greifobjekt 14 die flexible Saugkörperwandung 36 verformt und somit der Saugraum 36 bzw. ein Volumen des Saugraums 36 verändern. Die Figur 4 zeigt dabei beispielhaft den Fall, dass - während das Greifobjekt 14 über die Saugöffnung 38 angesaugt wird - eine gleichmäßige Kraft F in einer von der Anlagefläche 46 wegweisenden Richtung 48 auf das Greifobjekt 14 ausgeübt wird und somit das Greifobjekt 14 - unter Vergrößerung des Volumens des Saugraums 34 - von der Anlagefläche 46 abgehoben wird. Die Figur 5 zeigt beispielhaft den Fall, dass - während das Greifobjekt 14 über die Saugöffnung 38 angesaugt wird - einseitig eine Kraft F auf das Greifobjekt 14 ausgeübt wird und somit das Greifobjekt 14 relativ zu der Anlagefläche 46 verkippt wird.

Die Figuren 2 bis 5 zeigen eine Ausgestaltung des Sauggreifers 12, bei der die Anlagefläche 46 einen festen Anschlag für das Greifobjekt 14 bildet, also das Greifobjekt 14 aus der Greifkonfiguration an der Anlagefläche 46 nicht weiter in einer Richtung 50 auf die Anlagefläche 46 zu bewegt werden kann.

Wie vorstehend erwähnt, ist es aber auch möglich, dass die Anlagefläche 46 nachgiebig ausgebildet ist, sodass auch aus einer Greifkonfiguration, in welcher das Greifobjekt 14 in Folge eines Ansaugprozesses an der Anlagefläche 46 anliegt, das Greifobjekt 14 durch äußere Krafteinwirkung auf das Greifobjekt 14 weiter in einer Richtung 50 auf die Anlagefläche 46 zu bewegt werden kann.

Die Figur 6 zeigt dabei eine beispielhafte Ausgestaltung eines Sauggreifers 12, bei der die Anlagefläche 46 durch einen Anlageabschnitt 52 aus elastisch verformbarem Material (z.B. Elastomer oder technischer Schaum) bereitgestellt ist. Bei Aufbringen einer äußeren Kraft F auf das Greifobjekt 14 in Richtung 50 auf die Anlagefläche 46 zu kann der Anlageabschnitt 52 verformt, insbesondere gestaucht, und somit die Saugkörperwandung 34 - unter Reduktion des Volumens des Saugraums 32 - weiter komprimiert werden.

Die Figur 7 zeigt eine weitere beispielhafte Ausgestaltung, bei der die Anlagefläche 46 durch einen federnd gelagerten Anlageabschnitt 54 bereitgestellt ist. Bei Aufbringen einer äußerem Kraft F auf das Greifobjekt 14 in Richtung 50 auf die Anlagefläche 46 zu kann dann die Feder 54 unter weiterer Verformung der Saugkörperwandung 34 gespannt werden und somit das Volumen des Saugraums 34 weiter reduziert werden.

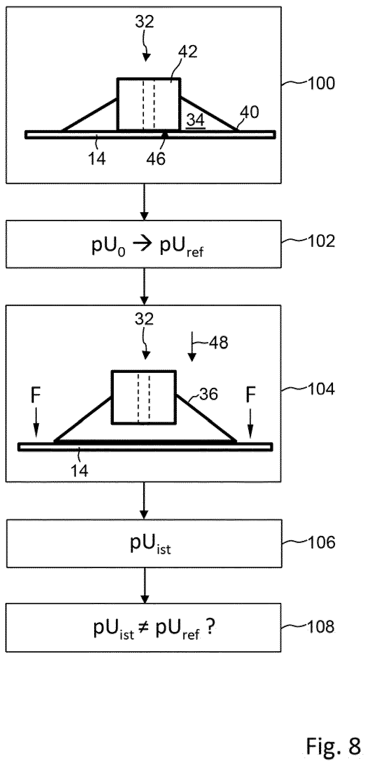

Im Folgenden wird ein beispielhaftes Verfahren zum Betreiben der Handhabungsanlage 10 unter Bezugnahme auf die Figur 8 erläutert. Bei dem Verfahren handelt es sich insbesondere um eine Verfahren zum Überwachen eines Greifzustands eines von dem Sauggreifer 12 gehaltenen Greifobjektes 14 während eines Arbeitsprozesses. Insbesondere dient das Verfahren auch zur Überwachung und optional Regelung des Arbeitsprozesses.

In einer Ausgangssituation des Verfahrens ist das Greifobjekt 14 von dem Sauggreifer 12 angesaugt und liegt an der Anlagefläche 46 des Saugkörpers 32 an (Greifkonfiguration, vgl. Block 100 in Figur 8)).

Hierzu kann zuvor ein Ansaugprozess durchgeführt worden sein, Insbesondere kann der Saugkörper 30 mit dem Anlageabschnitt 40 auf das Greifobjekt 14 aufgesetzt worden sein und sodann das Greifobjekt 14 durch Beaufschlagen des Saugraums 34 mit Unterdruck (durch die Unterdruckversorgungseinrichtung 18) angesaugt worden sein, bis es an der Anlagefläche 46 des Saugkörpers 32 anliegt. Wie vorstehend erwähnt, kommt es im Zuge des Ansaugprozesses unter Verformung der Saugkörperwandung 34 zu einer Komprimierung des Saugraums 34.

Wie vorstehend beschreiben, liegt in der Greifkonfiguration ein annähernd konstanter Gleichgewichts-Unterdruck pU₀ in dem Saugraum 34 vor. Der Gleichgewichts-Unterdruck pU₀ kann insbesondere durch einen Maximal-Unterdruck der Unterdruckerzeugungseinrichtung 20 und einer etwaigen Leckage im System, insbesondere zwischen Saugkörper 32 und Greifobjekt 14, bestimmt sein.

Gemäß dem Verfahren wird nach Erreichen der Greifkonfiguration der in dem Saugraum 34 vorherrschende (Gleichgewichts-)Unterdruck pU₀ mittels der Sensoreinrichtung 24 gemessen und sodann als Referenz-Unterdruck pU_{ref} in einer der nicht-flüchtigen Speichereinrichtung, in insbesondere der nicht-flüchtigen Speichereinrichtung der Steuereinrichtung 28, hinterlegt (Block 104 in Figur 8).

Im Beispiel wird der Unterdruck im Saugraum 34 indirekt über eine Messung in der Fluidleitung 26 zwischen Sauggreifer 12 und Unterdruckerzeugungseinrichtung 20 gemessen. Bei nicht dargestellten Ausgestaltungen ist es aber auch möglich, dass der Unterdruck pU₀ direkt in dem Saugraum 34 gemessen wird.

Wie vorstehend erwähnt, ist es auch denkbar, dass ein von dem Unterdruckwert pU₀ abgeleiteter Unterdruckwert (bspw. der Unterdruckwert pU₀ korrigiert um einen Korrekturfaktor) als Referenz-Unterdruck pU_{ref} gespeichert wird.

In einem weiteren Schritt (Block 106 in Figur 8) wird sodann (nach Abschluss des Ansaugprozesses) ein Arbeitsprozess durchgeführt. Beispielsweise kann es sich bei dem Arbeitsprozess um einen Bearbeitungsprozess handeln, in welchem das Greifobjekt 14 durch eine Bearbeitungsmaschine bearbeitet wird. Der Arbeitsprozess kann auch ein Verlagern des Sauggreifers 12 mit dem Manipulator 16 umfassen oder daraus bestehen.

Der Arbeitsprozess geht mit einer Krafteinwirkung auf das Greifobjekt 14 einher (in Figur 8 ist beispielhaft eine homogene Krafteinwirkung in Richtung 48 von der Anlagefläche 46 weg dargestellt). Solche Kräfte F können beispielsweise Bearbeitungskräfte während des Bearbeitungsprozesses sein und/oder Beschleunigungskräfte während einer Verlagerung des Greifobjektes 14 mittels des Manipulators 16. Es ist auch denkbar, dass auf das Greifobjekt weitere Objekte abgelegt gelegt werden (bspw. in der Art eines Tabletts) und die Gewichtskraft dieser zusätzlichen Objekte eine solche Krafteinwirkung darstellt.

Während des Arbeitsprozesses wird zumindest zu definierten Überwachungszeitpunkten (oder auch kontinuierlich) der Unterdruck pUᵢₛₜ in dem Saugraum 34 mittels der Sensoreinrichtung 24 (im Beispiel indirekt über die Fluidleitung 26) gemessen und mit dem in der Speichereinrichtung hinterlegten Referenz-Unterdruck pU_{ref} verglichen (Block 108 in Figur 8). Insbesondere kann auch eine Abweichung von dem Referenz-Unterdruck pU_{ref} ermittelt werden.

Wie vorstehend in Bezug auf die Figuren 2 bis 7 beschrieben, führt eine Krafteinwirkung auf das Greifobjekt 14 zu einer Verformung der flexiblen Saugkörperwandung 36 und somit zu einer Veränderung des Volumens des Saugraums 34 - was mit einer Druckänderung in dem Saugraum 34 verbunden ist.

Insofern kann über eine detektierte Abweichung des Unterdrucks pUᵢₛₜ von dem Referenz-Unterdruck pU_{ref} auf eine Krafteinwirkgun geschlossen werden. Insbesondere wird aus dieser Abweichung eine einwirkende Kraft und/oder ein einwirkendes Moment ermittelt (siehe oben).

Das "Vorzeichen" der Abweichung, also ob der gemessene Unterdruck pUᵢₛₜ kleiner oder größer als der Referenz-Unterdruck pU_{ref} ist, ermöglicht Aussagen zu der Richtung in welcher die Kraft F auf das Greifobjekt 14 wirkt. Wie vorstehend beschrieben führt eine Krafteinwirkung in einer Richtung 48 von der Anlagefläche 46 weg zu einer Vergrößerung des Volumens des Saugraums 34 (vgl. Figur 4) und somit zu einem im Vergleich zu dem Referenz-Unterdruck pU_{ref} erhöhten Unterdruck pUᵢₛₜ. Umgekehrt für eine Krafteinwirkung in einer Richtung 50 auf die Anlagefläche 46 zu zu einer Verkleinerung des Volumens des Saugraums 34 (vgl. Figur 6 und 7) und somit zu einem im Vergleich zu dem Referenz-Unterdruck pU_{ref} verringerten Unterdruck pUᵢₛₜ.

Wie vorstehend erwähnt, ist es auch denkbar, dass in Abhängigkeit der ermittelten Kräfte F oder Momente der Arbeitsprozess angepasst wird. Insofern kann es sich bei dem Verfahren auch um ein Steuerverfahren handeln.

## Patentansprüche

1. Verfahren zur Überwachung eines Greifzustands eines von einem Sauggreifer (12) gegriffenen Greifobjektes (14), wobei der Sauggreifer (12) einen Saugkörper (32) mit einem zumindest abschnittsweise von einer flexibel verformbaren Saugkörperwandung (36) begrenzten Saugraum (34) aufweist,
wobei zum Greifen des Greifobjektes (14) ein Ansaugprozess erforderlich ist, welcher mit einem Übergang des Saugkörpers (32) von einer Anfangskonfiguration zu einer komprimierten Greifkonfiguration einhergeht, wobei in der Greifkonfiguration in dem Saugraum (34) ein annähernd konstanter Unterdruck pU₀ vorherrscht und insbesondere das Greifobjekt (14) an einer Anlagefläche (46) des Sauggreifers (12) anliegt,
wobei der in der Greifkonfiguration in dem Saugraum (34) vorherrschende Unterdruck pU₀ gemessen wird und dieser Unterdruck pU₀ der ein hiervon abgeleiteter Druckwert pU₀ₖₒᵣᵣ als Referenz-Unterdruck pU_{ref} in einer nicht-flüchtigen Speichereinrichtung hinterlegt wird,
wobei nach dem Erreichen der Greifkonfiguration ein Arbeitsprozess, insbesondere Bearbeitungsprozess, durchgeführt wird, der mit einer Kraft- und/oder Momenteneinwirkung auf das Greifobjekt (14) einhergeht, wobei zumindest zu definierten Überwachungszeitpunkten während des Arbeitsprozesses der in dem Saugraum (34) vorherrschende Unterdruck pUᵢₛₜ gemessen wird und mit dem Referenzdruck pU_{ref} verglichen wird und/oder die Abweichung von dem Referenz-Unterdruck pU_{ref} ermittelt wird.

2. Verfahren nach Anspruch 1, wobei bei einer Abweichung des aktuellen Unterdrucks pUᵢₛₜ von dem Referenzdruck pU_{ref}, insbesondere zumindest bei Überschreiten eines vorgegebenen Schwellwertes, ein Kraftsignal erzeugt wird, welches eine Kraft und/oder Momenteneinwirkung auf das Greifobjekt (14) repräsentiert.

3. Verfahren nach Anspruch 1 oder 2, wobei dann, wenn ein im Vergleich zu dem Referenz-Unterdruck pU_{ref} erhöhter Unterdruck pUᵢₛₜ in dem Saugraum (34) gemessen wird, ein Kraftsignal erzeugt wird, welches eine Krafteinwirkung auf das Greifobjekt (14) in einer Richtung (48) von der Anlagefläche (46) weg repräsentiert.

4. Verfahren nach einem der vorherigen Ansprüche, wobei dann, wenn ein im Vergleich zu dem Referenzunterdruck pU_{ref} reduzierter Unterdruck pUᵢₛₜ in dem Saugraum (34) gemessen wird, ein Kraftsignal erzeugt wird, welches eine Krafteinwirkung auf das Greifobjekt (14) in einer Richtung (50) auf die Anlagefläche (46) zu repräsentiert.

5. Verfahren nach einem der vorherigen Ansprüche, wobei aus einer Abweichung des Unterdrucks pUᵢₛₜ von dem Referenz-Unterdruck pU_{ref} zu einem Überwachungszeitpunkt eine zu diesem Überwachungszeitpunkt als Belastung auf das Greifobjekt (14) wirkende Kraft und/oder Moment ermittelt wird.

6. Verfahren nach einem der vorherigen Ansprüche, wobei in Abhängigkeit einer Abweichung des Unterdruck pUᵢₛₜ von dem Referenz-Unterdruck pU_{ref} der Arbeitsprozess verändert wird, insbesondere Prozessdaten, welche Arbeitsschritte des Arbeitsprozesses definieren, verändert werden.

7. Verfahren nach Anspruch 5, wobei die ermittelte Kraft mit einem auf der Speichereinrichtung hinterlegten Soll-Kraftwert verglichen wird,
wobei der Soll-Kraftwert eine auf das Greifobjekt (14) wirkenden Kraft repräsentiert, welche in Folge des Arbeitsprozesses zu dem Überwachungszeitraum erwartet wird.

8. Verfahren nach dem vorherigen Anspruch, wobei eine Kraftabweichung der ermittelten Kraft von dem Soll-Kraftwert ermittelt wird und in Abhängigkeit dieser Kraftabweichung der Arbeitsprozess verändert wird, insbesondere Prozessdaten, welche Arbeitsschritte des Arbeitsprozesses definieren, verändert werden.

9. Handhabungsanlage, umfassend
- einen Sauggreifer (12) zum Ansaugen und somit Greifen eines Greifobjektes (14), aufweisend einen Saugkörper (32) mit einem zumindest abschnittsweise von einer flexibel verformbaren Saugkörperwandung (36) begrenzten Saugraum (34) und eine, vorzugsweise in dem Saugraum (34) angeordnete, Anlagefläche (46) zur Anlage des Greifobjektes (14);
- einen Manipulator (16) zur Verlagerung des Sauggreifers (12);
- eine Unterdruckerzeugungseinrichtung (20) zur Versorgung des Sauggreifers (12) mit Unterdruck;
- eine Sensoreinrichtung (24) zum Detektieren eines in dem Saugraum (34) vorherrschenden Drucks;
- eine Steuereinrichtung (28) zum Ansteuern der Handhabungsanlage (10), umfassend eine nicht-flüchtige Speichereinrichtung, wobei die Steuereinrichtung dazu eingerichtet ist, das Verfahren nach einem der vorherigen Ansprüche durchzuführen.

10. Verwendung einer Sensoreinrichtung (24), welche zum Messen eines Drucks in einem Saugraum (34) eines Sauggreifers (12) ausgebildet ist, zur Detektion von Kräften und/oder Momenten, welche auf ein von dem Sauggreifer (12) angesaugtes Greifobjekt (14) wirken.
